# EUROPEAN PATENT APPLICATION

(11) **EP 1 801 796 A1**
(43) Date of publication of application: **27.06.2007**
(21) Application number: 05772712.5
(22) Date of filing: 16.08.2005
(51) Int. Cl.: G11B 7/085, H04N 5/225, H04N 5/85

(54) **OPTICAL DISK RECORDING/REPRODUCING DEVICE AND ITS DRIVING METHOD**

(30) Priority: 17.08.2004 JP 2004237347
(71) Applicant: SONY CORPORATION, Tokyo 141-0001 (JP)
(72) Inventor: KATO, Hideo Sony Corporation IPR, Tokyo (JP)
(74) Representative: Mills, Julia
(86) International application number: PCT/JP2005/014952
(87) International publication number: WO 2006/019096

(57) **Abstract**

An optical disk recording and reproduction apparatus and a method of driving the optical disk recording and reproduction apparatus are provided which are capable of avoiding picking up of sled motor operation sound while a recording operation is being performed while utilizing high-speed accessibility of an optical disk.

The optical disk recording and reproduction apparatus (video camera) of the present invention has, as sled movement speeds of an optical pick-up, a first sled movement speed setting value for a reproduction mode, a second sled movement speed setting value for a recording mode, and a third sled movement speed setting value for a transfer mode. A sled movement speed setting value corresponding to an operation mode is selected. The second sled movement speed setting value for a recording mode is set lower than the first sled movement speed setting value for a reproduction mode, and the third sled movement speed setting value for a transfer mode is set higher than the first sled movement speed for a reproduction mode.

## Description

### Technical Field

The present invention relates to an optical disk recording and reproduction apparatus that is suitably used for a domestic video camera and a method of driving the optical disk recording and reproduction apparatus.

### Background Art

Hitherto, for domestic video cameras, a magnetic tape, such as an 8-mm tape or a DV (Digital Video) tape, has been used as a recording medium. In recent years, apparatuses of a type in which an optical disk typified by a DVD (Digital Versatile Disk)-RAM or the like is used have been developed.

This type of video camera that records moving images on an optical disk has superior random access performance, is able to instantly play back a recorded image, and is able to read information at a high speed without contact with a medium. Therefore, moving-image data can be transferred at a high speed from a video camera to an external device, such as a personal computer or a domestic video device, and can be edited. Thus, usages of a video camera that were not possible for a tape-based video camera of the related art have become possible.

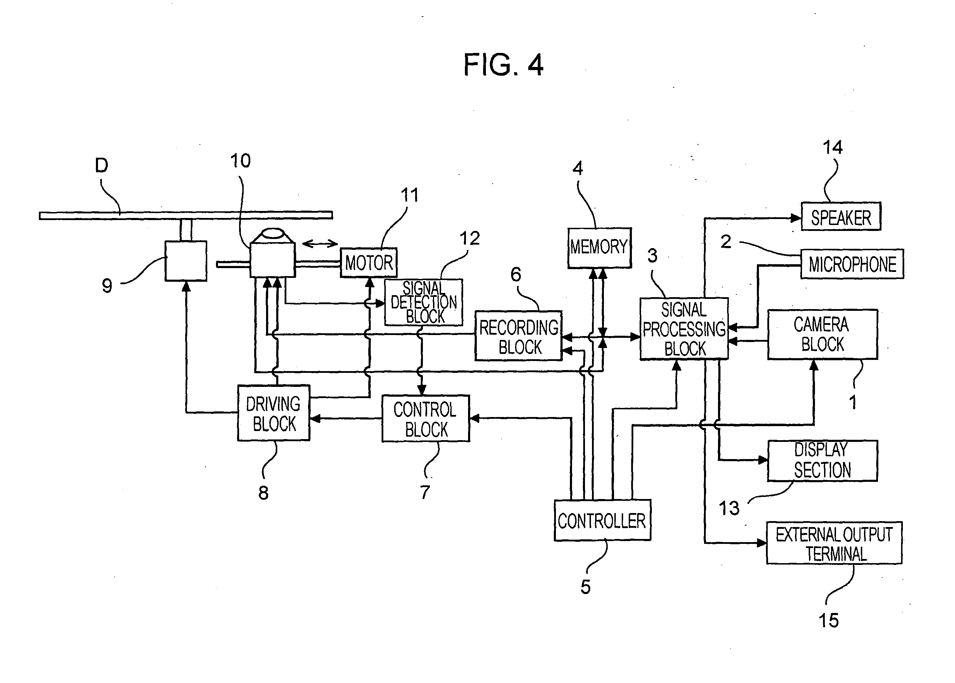

An example of the operation of this type of video camera of the related art will be described with reference to Fig. 4. Fig. 4 is a system block diagram of a video camera of the related art.

During image-capturing, image data of a subject image captured by a camera block 1 and audio data of external sound picked up by a microphone 2 are sent to a signal processing block 3. In this signal processing block 3, the image data and the audio data are converted into a format with which they can be recorded on an optical disk D. The converted data is temporarily stored in a memory 4. When the amount of data stored in the memory 4 exceeds a predetermined amount, a controller 5 allows audio data and image data to be read from the memory 4 and sends them to a recording block 6.

In order to record image data and audio data on the optical disk D, in addition, the controller 5 drives a spindle motor 9 via a control block 7 and a driving block 8, so that the optical disk D is rotated at a constant linear velocity (CLV). Thereafter, laser light is emitted from an optical pick-up 10, and after a focusing servo is applied to move a beam spot to a predetermined recording position of the optical disk D, a sled motor 11 is driven to move the optical pick-up 10 in a radial direction of the optical disk D. After the beam spot reaches a predetermined recording position, a tracking servo is applied to make the beam spot follow tracks of the optical disk D. Then, the recording block 6 writes the image data and the audio data that are transferred from the memory 4 into recording tracks of the optical disk D.

In response to the writing of the image data and the audio data onto the optical disk D, a servo error signal is read from the optical disk D and is supplied to a signal detection block 12. Then, the servo error signal is supplied from the signal detection block to the control block 7, and tracking servo control and focusing servo control are performed by the optical pick-up 10.

The speed of writing data from the memory 4 onto the optical disk D is higher than the speed at which data is transferred from the signal processing block 3 to the memory 4. Therefore, as writing of data onto the optical disk D progresses, the amount of data stored in the memory 4 is decreased. When the amount of the stored data falls below a predetermined amount, the controller 5 suspends the writing of data onto the optical disk D. Then, for the purpose of reducing power consumption, the controller 5 turns off the servo, the laser, and the spindle motor 9, thereby stopping a disk driving system until data is stored in the memory 4.

Then, image-capturing is successively continued. When the amount of the data stored in the memory 4 exceeds a predetermined amount, the disk driving system is operated, and the above-described control for writing data onto the optical disk D is performed again. In a recording mode of the video camera, intermittent recording of data onto the optical disk D, such as that described above, is performed.

On the other hand, in a reproduction mode, image data and audio data recorded on the optical disk D are read via the optical pick-up 10. At this time, the read image data and audio data are stored in the memory 4. Then, the controller 5 supplies the image data and the audio data stored in the memory 4 to the signal processing block 3, whereby they are converted into a reproduction format. Thereafter, the image data is supplied to a display section 13 such as a liquid-crystal panel, and the audio data is supplied to a speaker 14.

A servo error signal that is read together with the image data and the audio data is supplied to the signal detection block 12. From here, tracking servo control and focusing servo control are performed by the optical pick-up 10 via the control block 7.

In this reproduction mode, the speed at which image data and audio data are transferred from the optical disk D to the memory 4 is higher than the speed at which data is transferred from the memory 4 to the display section 13 and the speaker 14. Therefore, as the reading of data from the optical disk D progresses, the amount of data stored in the memory 4 is increased. When the amount of the stored data becomes greater than or equal to a predetermined amount, the controller 5 suspends the reading of data from the optical disk D and stops the disk driving system.

Then, reproduction is successively performed. When the amount of data stored in the memory 4 becomes smaller than or equal to a predetermined amount, the disk driving system is operated, and the above-described control for reading data from the optical disk D is performed again. As described above, in the reproduction mode of the video camera, intermittent reading of data is performed.

Furthermore, in a transfer mode, after image data and audio data that are recorded on the optical disk D are read via the optical pick-up 10, the image data and the audio data are transferred to an external device, such as a personal computer and a domestic video device (not shown), via the signal, processing block 3 and an output terminal 15. That is, in the transfer mode, since a data reproduction process is not performed by the signal processing block 3, reading of data by the optical pick-up 10 is continuously performed, and the read data is sequentially transferred to the external device.

A domestic video camera, in which an optical disk is used for a moving-image-data recording medium, operates as described above.

In the recording mode of a video camera of the related art, management data in which thumbnail data and the like are stored is also recorded together with the image data and the audio data on an optical disk. This management data is data that is necessary for high-speed moving image searching, data reading, and the like utilizing random accessibility of an optical disk. However, the data is not always recorded adjacent to the area where the image data and the audio data are recorded, and is often recorded at a position at which a certain degree of seeking is required. For this reason, while a recording operation is being performed, a seeking operation is frequently performed to record data.

As described above, when a recording operation is to be performed by this type of video camera, since a seeking operation is regularly performed during operation, the sled motor 11 is frequently operated.

However, the sound of the seeking operation of the optical pick-up 10, that is, the operation sound of the sled motor 11, while the recording operation is being performed, leaks outside the video camera, and this sound is input to the microphone 2 and is written together with the moving-image data onto the optical disk D, which is problematic.

In particular, in a domestic video camera required to be of small size to improve portability and ease of operation, since the driving system for the optical disk D, a camera, a microphone, and the like are housed within a limited housing space, it is very difficult to arrange the disk driving system including the sled motor 11, and the microphone 2 with a space therebetween.

On the other hand, of course, a sound-shielding member for suppressing picking up of operation sound of the sled motor 11 by the microphone 2 can be added. However, this causes the video camera to be enlarged. Furthermore, the sled transport operation of the optical pick-up 10 may be reduced in speed in order to reduce the volume of the motor operation sound. However, when the transfer mode is to be performed, the high-speed accessibility of the optical disk is suppressed. Furthermore, the sled motor 11 itself may be designed to reduce the operation sound volume thereof, but the cost inevitably increases.

The present invention has been made in view of the above-described problems. An object of the present invention is to provide an optical disk recording and reproduction apparatus capable of avoiding picking up of operation sound of a sled motor while a recording operation is being performed while utilizing high-speed accessibility of an optical disk, and a method of driving the optical disk recording and reproduction apparatus.

### Disclosure of Invention

In order to solve the above problems, in the present invention, three different types of speed setting values are provided as sled movement speeds of an optical pick-up, and one of the speed setting values is selected according to an operation mode by movement speed control means. That is, they are a first sled movement speed setting value for a reproduction mode, a second sled movement speed setting value for a recording mode, and a third sled movement speed setting value for a transfer mode. The optical disk recording and reproduction apparatus of the present invention includes movement speed control means for selecting one of the first to third sled movement speeds according to an operation mode.

The second sled movement speed setting value for a recording mode is set lower than the first sled movement speed setting value for a reproduction mode. As a result, while a recording operation is being performed, sled movement operation sound during seeking of an optical pick-up can be reduced, thereby avoiding picking up of the operation sound by a microphone.

The third sled movement speed setting value for a transfer mode is set higher than the first sled movement speed setting value for a reproduction mode. As a result, during the transfer operation, it becomes possible to transfer information read from the optical disk at a high speed, and it becomes possible to effectively use high-speed accessibility of an optical disk.

The movement speed control means may include a function of adjusting the second sled movement speed setting value for a recording mode on the basis of the operation sound volume of the sled movement mechanism. For example, depending on the image-capturing environment or the operation environment, the second set sled movement speed setting value may be considered insufficient. In this case, by further controlling the second sled movement speed to become lower in a range in which no influence is exerted on the recording operation, sled operation sound can be made quieter.

### Brief Description of the Drawings

Fig. 1 is a function block diagram of an optical disk recording and reproduction apparatus 20 according to a first embodiment of the present invention.
Fig. 2 is a flowchart illustrating the operation of the optical disk recording and reproduction apparatus 20.
Fig. 3 is a flowchart illustrating the operation of a second embodiment of the present invention.
Fig. 4 is a function block diagram of an optical disk recording and reproduction apparatus of the related art.

### Best Mode for Carrying Out the Invention

Embodiments of the present invention will now be described below with reference to the drawings.

### [First Embodiment]

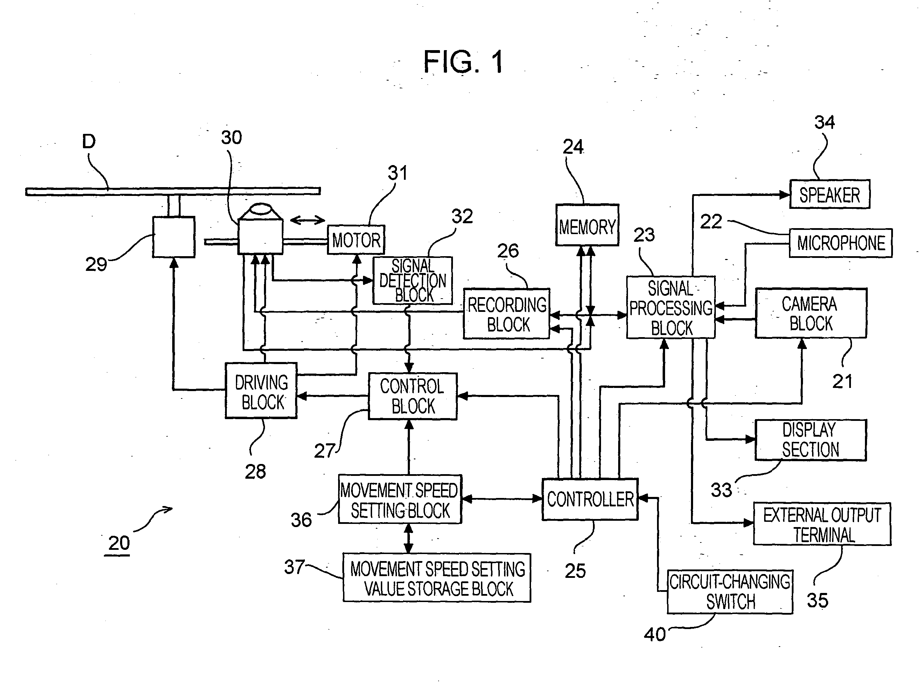

Fig. 1 is a function block diagram of an optical disk recording and reproduction apparatus according to a first embodiment of the present invention. An optical disk recording and reproduction apparatus 20 of this embodiment is formed of a domestic video camera, in which, as an optical disk, a DVD is used as a recording medium.

The optical disk recording and reproduction apparatus 20 includes a camera block 21, a microphone 22, a signal processing block 23, a memory 24, a controller 25, a recording block 26, a control block 27, a driving block 28, a spindle motor 29, an optical pick-up 30, a sled motor 31, a signal detection block 32, a display section 33, a speaker 34, an external output terminal 35, a movement speed setting block 36, and a movement speed setting value storage block 37. These components are housed and arranged within a common video camera housing.

The optical disk recording and reproduction apparatus 20 of this embodiment has a recording mode for writing image data of a subject image captured by the camera block 21 and audio data of external sound picked up by the microphone 22 onto an optical disk D via the optical pick-up 30; a reproduction mode for reading image data and audio data recorded on the optical disk D via the optical pick-up 30; and a transfer mode for reading image data and audio data recorded on the optical disk D via the optical pick-up 30 and for transferring them to the outside.

The camera block 21 includes solid-state image-capturing elements, such as CCDs (Charge Coupled Devices), lenses, and the like, and generates the image data (moving-image data) of a subject image. The microphone 22 is used to pick up external sound, operates in synchronization with the camera block 21, and generates audio data associated with image data.

The signal processing block 23 converts the image data supplied from the camera block 21 and the audio data supplied from the microphone 22 into a format with which they can be recorded onto the optical disk D, and stores the converted data in the memory 24. Furthermore, the signal processing block 23 reproduces image data and audio data from an RF signal read from the optical disk D and supplies them to the display section 33 and the speaker 34, respectively, or transfers the image data and the audio data to an external device (a personal computer, a domestic video device, etc.) connected to an external output terminal 35 via the external output terminal 35.

The controller 25 functions as control means for centrally controlling the operation of the optical disk recording and reproduction apparatus 20. The controller 25 drives the spindle motor 29 via the control block 27 and the driving block 28 so that the optical disk D is rotated. Thereafter, laser light is emitted from the optical pick-up 30 and a focusing servo is applied to move a beam spot to a predetermined recording position on the optical disk D. Then, the controller 25 drives the sled motor 31 in order to move the optical pick-up 30 in a radial direction of the optical disk D. After the beam spot reaches the predetermined recording position, a tracking servo is applied to make the beam spot follow tracks of the optical disk D.

On the basis of a servo error signal detected by the signal detection block 32, the control block 27 and the driving block 28 perform focusing servo control, tracking servo control, skew servo control, and the like of the optical pick-up 30, and also perform control of the number of revolutions of the spindle motor 29 and control of driving the sled motor 31.

The sled motor 31 constitutes a sled movement mechanism for moving the optical pick-up 30 in a radial direction of the optical disk D. The sled movement mechanism includes a rack gear, a slide shaft, and the like for converting the rotation driving force of the sled motor 31 into the linear driving force of the optical pick-up 30.

The sled operation sound of the optical pick-up 30 is related to the driving sound of the sled motor 31, engaging sound between gears, sliding sound of the shaft, and the like when the optical pick-up 30 is moved. The sled operation sound occurs mainly during the seeking operation of the optical pick-up 30 and becomes larger in proportion to the sled movement speed.

Therefore, in this embodiment, a plurality of sled movement speeds of the optical pick-up 30 are provided in advance, and a sled movement speed is set on the basis of the operation mode of the optical disk recording and reproduction apparatus 20.

Now, a more specific description will be given. The plurality of sled movement speed setting values are stored as fixed values in the movement speed setting value storage block 37. For the movement speed setting value storage block 37, storage elements such as semiconductor memories can be used. For the plurality of sled movement speed setting values stored in the movement speed setting value storage block 37, one of the sled movement speed setting values is selected by the movement speed setting block 36. On the basis of the operation mode (the recording mode, the reproduction mode, or the transfer mode) of the optical disk recording and reproduction apparatus 20, the movement speed setting block 36 selects the pre-assigned sled movement speed setting value. The operation mode is determined by the controller 25.

More specifically, in the movement speed setting value storage block 37, three types of sled movement speed setting values, that is, the first sled movement speed setting value for a reproduction mode, the second sled movement speed setting value for a recording mode, and the third sled movement speed setting value for a transfer mode, are stored. Here, the second sled movement speed setting value (for recording) is set to a speed lower than the first sled movement speed setting value (for reproduction). The third sled movement speed setting value (for transfer) is set to a speed higher than the first sled movement speed setting value (for reproduction).

The first to third sled movement speed setting values can be selected as appropriate according to the specification of the device. In this embodiment, for the first sled movement speed for a reproduction mode, the sled movement speed (common among recording, reproduction, transfer) used in the above-described video camera of the related art is set. On the other hand, the second sled movement speed for a recording mode is set to a speed in a range where no influence is exerted on recording operation, so that the sound volume of the sled operation sound becomes smaller than or equal to a predetermined volume. The third sled movement speed for a transfer mode can be set to a high speed as long as no influence is exerted on transfer operation.

The controller 25, the movement speed setting block 36, and the movement speed setting value storage block 37 constitute the movement speed control means of the present invention.

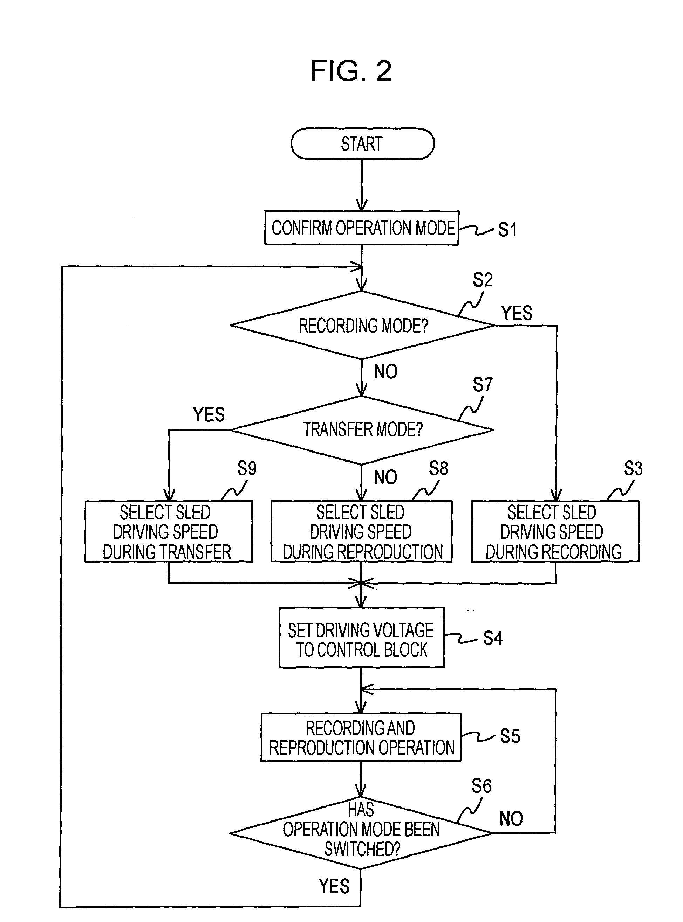

Next, the details of the optical disk recording and reproduction apparatus 20 of this embodiment will be described in conjunction with an example of the operation thereof. Fig. 2 is a flowchart illustrating part of the operation of the optical disk recording and reproduction apparatus 20.

The controller 25 constantly confirms the operation mode of the optical disk recording and reproduction apparatus 20 (step S1). The switching of the operation mode (recording, reproduction, and transfer) is performed using a circuit-changing switch 40 (Fig. 1) to be operated by a user.

Therefore, when the circuit-changing switch 40 is switched to camera functions, the controller 25 confirms the recording mode for the optical disk D as an operation mode. In response, the movement speed setting block 36 selects the second sled movement speed setting value for a recording mode from the movement speed setting value storage block 37 (steps S2 and S3), and inputs the selected sled movement speed setting value to the control block 27 (step S4).

In this embodiment, the sled motor 31 is formed of a DC motor. For adjusting the sled movement speed of the optical pick-up 30, the driving voltage of the sled motor 31 is adjusted. Furthermore, in step S4 above, a driving voltage corresponding to the selected sled movement speed setting value is set. When the sled motor 31 is formed of a pulse motor, a duty ratio corresponding to the sled movement speed setting value is set.

Next, when a recording start button is depressed by the user, the recording operation is started (step 55). The image (moving image) data of a subject image captured by the camera block 21, and the audio data of external sound picked up by the microphone 22 are converted into a format with which they can be recorded on the optical disk D by the signal processing block 23. The converted data is temporarily stored in the memory 24. When the amount of data stored in the memory 24 exceeds a predetermined amount, the controller 25 allows image data and audio data to be read from the memory 24, and the data is sent to the recording block 26.

The controller 25 also drives the spindle motor 29 via the control block 27 and the driving block 28 so that the optical disk D is rotated at a constant linear velocity (CLV). Thereafter, a laser is generated from the optical pick-up 30, and a focusing servo is applied to move a beam spot to a predetermined recording position of the optical disk D. Then, the sled motor 31 is driven at the second sled movement speed in order to move the optical pick-up 30 in a radial direction of the optical disk D. After the beam spot reaches the predetermined recording position, a tracking servo is applied to make the beam spot follow tracks of the optical disk D. Then, the recording block 26 writes the image data and the audio data transferred from the memory 24 onto recording tracks of the optical disk D.

The speed at which data is written from the memory 24 onto the optical disk D is higher than the speed at which data is transferred from the signal processing block 23 to the memory 24. Therefore, as writing of data onto the optical disk D progresses, the data stored in the memory 24 is decreased. When the amount of the stored data becomes smaller than or equal to a predetermined amount, the controller 25 suspends the writing of data onto the optical disk D. Then, for the purpose of reducing power consumption, the controller 25 turns off the servo, the laser, and the spindle motor 29, thereby stopping the disk driving system until data is stored in the memory 24.

Then, image-capturing is successively continued. When the amount of the data stored in the memory 24 exceeds a predetermined amount, the disk driving system is operated, and the above-described control of writing data onto the optical disk D is performed again. In the recording mode of the video camera, intermittent recording of data onto the optical disk D, such as that described above, is performed.

Also, in the recording mode of the video camera (the optical disk recording and reproduction apparatus 20) according to this embodiment, similarly to the above-described video camera of the related art, management data, in which thumbnail data and the like are stored, is recorded together with the image data and the audio data on the optical disk D. This management data is data that is necessary for high-speed moving image searching, data reading, and the like utilizing random accessibility of an optical disk. However, the data is not always recorded adjacent to the area where the image data and the audio data are recorded, and is often recorded at a position at which a certain degree of seeking is required. For this reason, while a recording operation is being performed, a seeking operation is frequently performed to record data.

At this time, in this embodiment, since the second sled movement speed for a recording mode is set in the control block 27, the sled movement speed of the optical pick-up 30 during the seeking operation is lower than the sled movement speed during the reproduction mode.

On the other hand, when the circuit-changing switch 40 is switched to video functions (step S6), the controller 25 confirms the reproduction mode of the optical disk D as an operation mode. In response, the movement speed setting block 36 selects a first sled movement speed setting value for a reproduction mode from the movement speed setting value storage block 37 (steps S2, S7, and S8), and inputs the selected sled movement speed setting value to the control block 27 (step S4). Then, the reproduction operation described below will be performed (step S5).

The controller 25 allows the optical pick-up 30 to emit laser light and applies a focusing servo for moving a beam spot to a desired reading position of the optical disk D. Thereafter, the controller 25 performs control of driving the sled motor 31 so that the optical pick-up 30 is moved at the first set sled movement speed. After the beam spot reaches the desired track reading position, a tracking servo is applied to make the beam spot follow tracks on the optical disk D.

The image data and the audio data recorded on the optical disk D are read via the optical pick-up 30 and are temporarily stored in the memory 24. The stored data is read at the same time by the signal processing block 23, whereby a reproduction process is performed. Thereafter, the image data is sent to the display section 33 and also, the audio data is sent to the speaker 34.

Also, in this reproduction mode, in the optical pick-up 30, a predetermined seeking operation for reading management data, such as thumbnail data recorded on the optical disk D, is performed. In this case, a seeking operation is performed at a first sled movement speed higher than that of the above-described recording mode. The speed at which data is read from the optical disk D by the optical pick-up 30 is higher than the speed at which data stored in the memory 24 is reproduced by the signal processing block 23. Therefore, the operation of reading data from the optical disk D becomes intermittent. While the reading operation is being halted, the servo is turned off, and the power consumption of the optical disk driving system is reduced.

Next, when the circuit-changing switch 40 is switched to a transfer mode, the controller 25 confirms this switching. The movement speed setting block 36 selects a third sled movement speed setting value for a transfer mode from the movement speed setting value storage block 37 (steps S7 and S9), and the third selected sled movement speed setting value for a transfer mode is input to the control block 27 (step S4).

In the transfer mode, similarly to the reproduction mode, image data and audio data recorded on the optical disk D are read via the optical pick-up 30. However, processing commensurate with a predetermined reproduction rate is not performed by the signal processing block 23, and the read data is transferred as is to an external device, such as a personal computer, via the output terminal 35. Therefore, reading of data is performed at a speed higher than that described above in the reproduction mode.

Also, in the transfer mode, in the optical pick-up 30, a predetermined seeking operation for reading management data, such as thumbnail data recorded on the optical disk D, is performed. In this case, a seeking operation is performed at the third sled movement speed higher than that described above in the reproduction mode.

As has thus been described, according to this embodiment, the second sled movement speed for a recording mode is set at a speed lower than the first sled movement speed for a reproduction mode. In consequence, sled operation sound resulting from a seeking operation during the recording mode can be reduced. As a result, it is possible to avoid picking up of sled operation sound by the microphone 22 and possible to record moving-image data with high quality.

Furthermore, since the seeking operation during the reproduction mode can be performed at a speed higher than that during the recording mode, it is possible to take a longer driving pause time for the intermittent operation. As a result, high-speed accessibility of the optical disk can be effectively utilized and also, power consumption of the optical disk driving system can be reduced.

In addition, when data is to be transferred at a high speed to an external device, such as a personal computer, this transfer can be performed in such a way that, by allowing the device of the location where the data has been transferred to perform part of the signal processing, time required for the signal processing block 23 can be reduced, and in such a way that data is hardly stored in the memory 24. Therefore, as in this embodiment, by performing a seeking operation during the transfer mode at the sled movement speed higher than that during the reproduction mode, it is possible to further improve the speed of the data transfer process.

### [Second Embodiment]

A second embodiment of the present invention will be described next.

In the above-described first embodiment, the second sled movement speed setting value for a recording mode is stored as a fixed value in the movement speed setting value storage block 37. However, there may be a case in which, depending on the image-capturing environment or the operation environment of the video camera, the level of the image quality is deteriorated as a result of picking up sled operation sound even at the set sled movement speed. Therefore, in this embodiment, there is provided an adjustment function capable of re-setting the second sled movement speed setting value for a recording mode so that the sled operation sound can be optimized in accordance with the image-capturing environment.

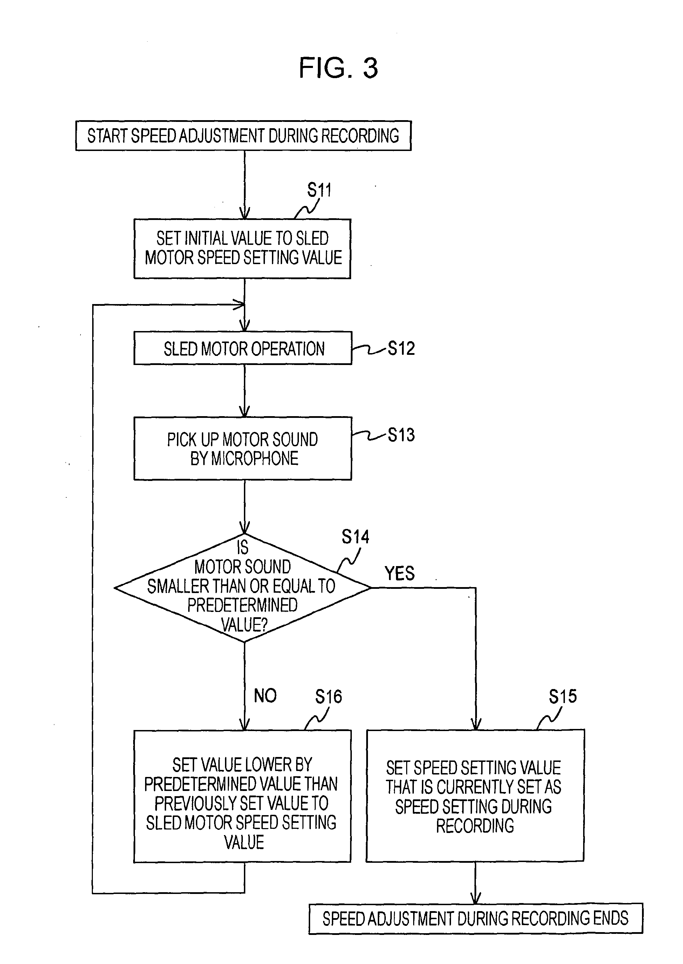

Fig. 3 is a process flow illustrating a sled movement speed adjustment method during a recording mode. This process is performed, for example, at the initialization time after the power supply of the video camera 20 is switched on.

First, an initially set value of the second sled movement speed for a recording mode, which is stored in the movement speed setting value storage block 37, is read, and this value is set in the control block 27 (step S11). Under this condition, the sled motor 31 is driven so that the optical pick-up 30 is made to sled-operate (step S12).
Then, motor sound (operation sound) at this time is picked up by the microphone 22 (step S13). Next, the sound volume of the motor sound picked up by the microphone 22 is compared with a predetermined value (reference value) that is provided in advance (step S14). When the sound volume is smaller than or equal to the predetermined value, the currently set sled movement speed setting value is maintained (step S15).

In comparison, when the picked-up motor sound exceeds the predetermined value, a speed setting value lower by a predetermined amount than the currently set speed setting value is set as a second sled movement speed setting value for a recording mode (step S16). Then, the sled operation is performed again at the reset speed setting value, the motor sound at that time is measured, and the above processing is continued until the motor sound becomes smaller than or equal to the predetermined value.

In the foregoing description, an example is described in which, when the motor sound exceeds a predetermined value, the sled movement speed setting value is decreased by a predetermined amount. In addition to this example, the following method can be applied: a speed setting value corresponding to the sound volume level of the measured motor sound is computed to update the sled movement speed setting value to the optimum speed setting value, or an optimum speed setting value is selected from a table that is generated in advance in such a manner as to correspond to sound volume levels of motor sounds.

The embodiments of the present invention have thus been described. Of course, the present invention is not limited to these embodiments, and various modifications are possible on the basis of the technological concept of the present invention.

For example, the above embodiments have been described by taking, as an example, a domestic video camera, in which a DVD (Digital Versatile Disk) is used as an optical disk D. Alternatively, the present invention can be applied to an optical disk recording and reproduction apparatus in which another optical disk such as an MD (Mini-Disk) is used as a recording medium.

### Industrial Applicability

According to the present invention, sled operation sound during the seeking of the optical pick-up while the recording operation is being performed can be effectively prevented from being picked up by a microphone. Therefore, it is possible to record moving-image data with high quality. Furthermore, when the recorded moving-image data is to be transferred to an external device, high-speed transfer of data can be realized by effectively using superior random accessibility of an optical disk.

## Claims

1. An optical disk recording and reproduction apparatus including a camera for capturing a subject image and for generating image data, a microphone for picking up external sound and for generating audio data, an optical pick-up for writing the image data and the audio data onto an optical disk and for reading the image data and the audio data from the optical disk, and a sled movement mechanism for moving the optical pick-up in a radial direction of the optical disk, the optical disk recording and reproduction apparatus being provided with
a first sled movement speed for a reproduction mode for reading the image data and the audio data from the optical disk;
a second sled movement speed for a recording mode for writing the image data and the audio data onto the optical disk, the second sled movement speed being lower than the first movement speed; and
a third sled movement speed for a transfer mode for reading the image data and the audio data recorded on the optical disk and for transferring the image data and the audio data to the outside, the third sled movement speed being higher than the first movement speed, the optical disk recording and reproduction apparatus comprising:
movement speed control means for selecting one of the first to third sled movement speeds on the basis of an operation mode.

2. The optical disk recording and reproduction apparatus according to Claim 1, wherein the movement speed control means comprises adjustment means for adjusting the second sled movement speed on the basis of the operation sound volume of the sled movement mechanism.

3. A method of driving an optical disk recording and reproduction apparatus having a recording mode for writing image data of a subject image captured by a camera and audio data of external sound picked up by a microphone onto an optical disk via an optical pick-up, a reproduction mode for reading the image data and the audio data recorded on the optical disk via the optical pick-up, and a transfer mode for reading the image data and the audio data recorded on the optical disk via the optical pick-up and for transferring the image data and the audio data to the outside, the method comprising the steps of:
moving the sled of the optical pick-up at a speed lower than that in the reproduction mode in the case of the recording mode; and
moving the sled of the optical pick-up at a speed higher than that in the reproduction mode in the case of the transfer mode.

4. The method of driving an optical disk recording and reproduction apparatus according to Claim 3, wherein operation sound when the sled of the optical pick-up is moved is detected, and the sled movement speed in the recording mode is adjusted so that the operation sound volume becomes smaller than or equal to a predetermined volume.
